# EUROPEAN PATENT SPECIFICATION

(11) **EP 2 470 762 B1**
(45) Date of publication and mention of the grant of the patent: **26.08.2015**
(21) Application number: 10747467.8
(22) Date of filing: 19.07.2010
(51) Int. Cl.: F02B 37/00, F01N 5/04, F02B 41/10

(54) **INTERNAL COMBUSTION ENGINE ARRANGEMENT**
VERBRENNUNGSMOTORANORDNUNG
AGENCEMENT DE MOTEUR À COMBUSTION INTERNE

(30) Priority: 28.08.2009 FI 20095891
(43) Date of publication of application: 04.07.2012
(73) Proprietor: Wärtsilä Finland Oy, 65380 Vaasa (FI)
(72) Inventor: LEVANDER, Oskar, FI-21600 Länsiturunmaa (FI); HÄGGMAN, Sten-Erik, FI-65320 Vasa (FI)
(74) Representative: Berggren Oy Ab
(86) International application number: PCT/FI2010/050602
(87) International publication number: WO 2011/023848

(56) References cited:
- WO-A1-2008/135059
- CH-A5- 653 411
- DE-A1-102004 027 593
- FR-A1- 2 592 916
- Anonymous: "Selective Catalytic Reduction System for reducing NOx emissions installed on an MAN B&W 6S35MC diesel engine" NEWSLETTER FROM MAN B&W DIESEL, [Online] 18 September 2001 (2001-09-18), pages 1-2, XP002613019 Retrieved from the Internet: URL:http://www.mandieselturbo.com/files/ne ws/filesof874/Reduction%20NOx.pdf> [retrieved on 2010-12-07]
- SANDRA AUFDENBLATTEN: "Status of Emission Control on Wärtsilä 2-stroke Sulzer RTA engines"[Online] 23 July 2002 (2002-07-23), pages 1-15, XP002613020 Wärtsillä Retrieved from the Internet: URL:http://www.arb.ca.gov/ports/marinevess /presentations/072602/wartsila072602.pdf> [retrieved on 2010-12-07]
- "MAN B&W diesels for "clean design" products/chemical tankers", , 15 June 2004 (2004-06-15), Retrieved from the Internet: URL:http://www.marinelog.com/DOCS/NEWSMMIV /MMIVJun15b.html [retrieved on 2013-08-21]

## Description

### Technical field

The invention relates to an internal combustion engine arrangement deployed on a marine vessel with an engine room and an engine casing directly connected to the engine room as further defined in the preamble of claim 1.

### Background art

On marine vessels internal combustion engines, e.g. diesel engines, are normally deployed for providing propulsion power and electric energy for hotel consumers. Exhaust gas from such engines, particularly diesel engines, contains surplus energy that can be categorized as waste energy.

In conventional arrangements, waste energy is recovered in a turbo charger that feeds combustion air to the engine. Such an arrangement is known from WO 2008/135059 A1, which discloses a large supercharged diesel engine with a turbocharger and an selective catalytic reduction (SCR) unit. Generally, on one hand, at high loads, there is more energy available than needed, and on the other hand, at low loads the turbo charger does not supply enough air.

Due to environmental regulations, stricter emission rules are and will be applied. Typically, selective catalytic reduction (SCR) has been used to reduce NOₓ emissions. In order to arrive at an appropriate degree of efficiency, selective catalytic reduction requires rather high temperatures. In employing a turbo charger, the temperature generally drops to a level which is not sufficient, particularly concerning a 2-stroke engine in which the temperature level is than in a 4-stroke engine. Consequently, SCR units have to be arranged at a point of an exhaust gas flow where the temperature is high enough. This results in space problems, particularly on marine vessels.

As mentioned above, in a 2-stroke marine vessel engine installation the location of a SCR unit is particularly troublesome due to lower exhaust gas temperature after the turbo charger as compared with a 4-stroke engine. In known solutions the SCR unit is normally placed before the turbocharger. An SCR reactor includes large containers and pipes which cause design problems when located in an engine room of a marine vessel, where space is limited.

### Summary of invention

An object of the present invention is to achieve an internal combustion engine arrangement which avoids the above mentioned problems and allows for increased operating efficiency, while also providing for emission control. This object is attained by an internal combustion engine arrangement according to claim 1.

The basic idea of the present invention is to provide the internal combustion engine arrangement with a replacement system for the conventional turbo charger in order to enhance engine efficiency, while allowing arrangements for an effective emission control. This can be provided by having the internal combustion engine arrangement further comprise a selective catalytic reduction unit, which is arranged in the engine casing directly before the turbine unit including the electric generator in the direction of the exhaust gas flow.

The engine casing is a structure located above the engine room of a marine vessel extending from the engine room up to the exterior of the marine vessel. The engine casing provides a housing for the exhaust pipe of the internal combustion engine.

Advantageously, and for a further control of the exhaust gas flow, an exhaust gas economiser is arranged directly after the turbine unit including an electric generator in the direction of the exhaust gas flow. A silencer may also be arranged directly after the exhaust gas economiser in the direction of the exhaust gas flow.

Preferably also the exhaust gas economiser is arranged in the engine casing.

Preferably also the silencer is arranged in the engine casing.

The present invention is particularly advantageous in the case that the internal combustion engine is a 2-stroke low speed engine typically used for marine vessels. Without a conventional turbo charger the exhaust gas can be led directly to the selective catalytic reduction unit before it is led to the turbine unit, thus providing a high enough temperature for the reduction process.

The present invention is particularly advantageous in the case that the internal combustion engine is a 4-stroke medium speed engine typically used for marine vessels. Without a conventional turbo charger the relatively higher exhaust gas temperature allows for the selective catalytic reduction process to start earlier during engine start-up and to run also at very low loads.

The present invention is particularly advantageous in the case that the internal combustion engine is dual fuel engine typically used for marine vessels. This is due to the possibility for an independent control of the air flow made possible by the compressor unit driven by the electric motor.

Preferably, the electric generator of the turbine unit is connected to the electric motor by means of an electric switch board on the marine vessel, whereby electric energy generated by the electric generator also can be used by other consumers on board by way of the electric switchboard.

Preferably, a first control means is arranged between the electric generator of the turbine unit and the electric switchboard for adjusting the electricity to suit an electric network on the marine vessel.

Preferably, a second control means is arranged between the electric switchboard and the electric motor in order to adjust the speed of the electric motor.

Advantageously, the internal combustion engine arrangement is provided with one or more auxiliary generator units, which are connected to the switchboard. This provides redundancy and secures the operation of the compressor in all operational modes of the marine vessel.

Advantageous features of the present invention are defined in claims 2-12.

### Brief description of drawings

In the following the invention will be described, by way of example only, with reference to the accompanying schematic drawing, which illustrates an embodiment of the present invention.

### Detailed description

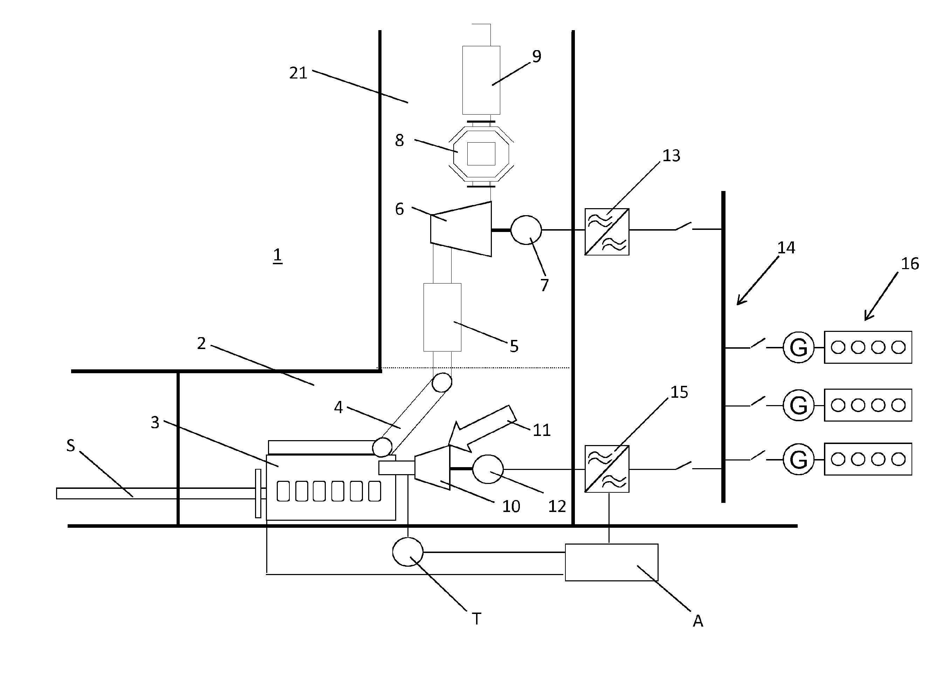

In the embodiment of the present invention shown in the drawing, a marine vessel deploying the present invention is generally indicated by reference numeral 1. The marine vessel 1 is provided with at least one internal combustion engine 3, which is located in an engine room 2 on the marine vessel 1. The internal combustion unit 3 is connected to a main shaft S, which is connected e.g. to a propulsion unit or generator (not shown) on the marine vessel 1.

The internal combustion engine 3 is provided with an exhaust pipe 4 for receiving an exhaust gas flow from the internal combustion engine 3. In this embodiment, the exhaust pipe 4 is arranged to lead to a selective catalytic reduction unit 5. After the selective catalytic reduction unit 5, in the flow direction of the exhaust gas flow, a turbine unit 6, a so-called exhaust gas turbine, including an electric generator 7 is provided. After the turbine unit 6 including the electric generator 7, the exhaust gas flow is arranged to be led to an exhaust gas economiser 8 and further through a silencer 9 to the atmosphere. Thus, the arrangement does not include a conventionally used turbo charger.

The internal combustion engine 3 is further provided with a compressor unit 10 for providing combustion air to the internal combustion engine 3. The air supply for the compressor unit 10 is indicated by block arrow 11. The compressor unit 10 is provided with a drive means in the form of an electric motor 12. The electric generator 7 of the turbine unit 6 is connected to the electric motor 12 in order to supply electric energy for driving the electric motor 12.

In the embodiment shown, an engine casing 21 is arranged in connection with the engine room 2. The engine casing 21 is thus directly connected to the engine room 2. The engine casing 21 is a structure located above the engine room 2 of the marine vessel 1 extending from the engine room 2 up to the exterior of the marine vessel 1. The engine casing 21 provides a housing for the exhaust pipe 4 of the internal combustion engine.

The exhaust pipe 4 (at least partly as shown in the embodiment as illustrated in the drawing), the selective catalytic reduction unit 5, the turbine unit 6 including the electric generator 7, the exhaust gas economiser 8, the silencer 9, as well as the electric motor 12, can all be arranged within the engine casing 21 of the marine vessel 1. However, as discussed more in detail below, the advantages of the present invention can be achieved by another arrangement. The exhaust gas economiser 8 and the silencer 9 are optional features for the invention depending on the prevailing requirements. The arrangement can also be provided with a scrubber unit (not shown - discussed below as well) in the exhaust gas flow after the turbine unit 6 including the electric generator 7.

The electric generator 7 of the turbine unit is arranged to supply electric energy, preferably through a first control means 13, to an electric switch board 14 on the marine vessel 1. Electric energy is arranged to be supplied by way of the electric switch board 14, preferably through a second control means 15, to the electric motor 12 of the air compressor unit 10 for driving said air compressor unit 10. An automation system, connected to the second control means 15 and the internal combustion unit 3, is schematically indicated by reference sign A.

The embodiment of the invention shown in the drawing also shows three additional so-called auxiliary generator units (gensets) as indicated by reference numeral 16, which are connected to the electric switchboard 14 for supplying electric energy to the same. Electric energy from the auxiliary generator units 16 can also be led to the electric motor 12 of the compressor unit 10. The auxiliary generator units 16 may be one or more in number.

The present invention, as noted above, is advantageously deployed in a marine vessel 1 provided with an engine room 2 and a thereto connected engine casing 21. A conventionally used turbo charger is replaced (discussed below as well) by the turbine unit 6, a so-called exhaust gas turbine, including the electric generator 7. The electric energy generated by the electric generator 7 of the turbine unit 6 is supplied to the electric switch board 14 on the marine vessel 1. The electric generator 7 is connected to the electric switchboard 14 through the first control means 13, which is arranged to adjust the electricity, with regard e.g. to frequency, voltage, etc., to suit an electric network on the marine vessel. The compressor unit 10 is driven by the electric motor 12, which is connected to the electric switchboard 14 through the second control means 15 for adjusting the speed of the electric motor according to the internal combustion engine control input. The compressor unit 10 supplies combustion air to the internal combustion engine 3. The electric generator 7 of the turbine unit 6 can also be arranged to supply electric energy directly to the electric motor 12 (not shown) instead of by way of the electric switchboard 14.

Normally there are also one or more other generator means, such as the above mentioned auxiliary generator units 16 connected to the electric switchboard 14 on the marine vessel 1 for providing electric energy.

At high loads there will be more energy recovered than consumed by the compressor unit 10. By means of the electric generator 7 of the turbine unit 6 this can be supplied to the electric switch board 14 for other consumption on the marine vessel 1.

Electric energy from the electric generator 7 of the turbine unit 6 can also be supplied to other consumers onboard.

Further, the above discussed arrangement allows for controlling the output of the compressor unit 10 independently of the output of the electric generator 7 of the turbine unit 6. This means that sufficient combustion air for the internal combustion engine 3 can be supplied at all loads by the independently working compressor unit 10. Compared to a conventional turbo charger, there will be less so-called turbo lag, since the compressor unit 10 can increase output quickly as it is driven by the electric motor 12. This means that engine load increase can be faster. A precise control of the amount of air supplied is possible to achieve.

Adding components such as the SCR unit and e.g. a scrubber (discussed above) may increase the exhaust back pressure, which may require compensation by higher intake air pressure. However, an additional advantage of the present invention in this respect is that the exhaust piping around the internal combustion engine is less complex compared to when a conventional turbo charger is used (discussed above). This advantageous configuration results in a reduction of back pressure.

The amount of air supplied by the compressor unit 10 can be controlled by taking into account air temperature, moisture, etc. and by ensuring that the internal combustion engine 3 receives air of right temperature. In comparison with a conventional turbo charger, there is no need for a waste gate or by-pass arrangement, since the compressor unit 10 can be controlled independently from the internal combustion engine load and the exhaust gas flow. Further, air flow can be reduced at lower temperatures, allowing for operation at lower inlet temperatures and reducing the need to heat incoming air. Consequently, it is advantageous to add a temperature control T to the arrangement which is connected to the automation system A.

The independent control of air flow that can be achieved by the compressor unit 10 is particularly advantageous for dual fuel engines. Air demand is quite different for gas fuel operation as compared to diesel fuel operation.

In the internal combustion engine arrangement according to the present invention the turbine unit 6 including the electric generator 7 and the compressor unit 10 can be located independently of each other, whereby these do not have to be located directly on the internal combustion engine 3. Thus, the turbine unit 6 including the electric generator 7 can be located in the engine casing 21.

In case the internal combustion engine 3 is a 2-stroke low speed engine with a conventional turbo charger, the exhaust gas flow normally is from the engine to the selective catalytic reduction unit and then to the turbocharger (and further to the exhaust gas economiser) in order to provide an exhaust gas with a temperature high enough for the reduction process. As the turbo charger normally is built on the engine, also the selective catalytic reduction unit has to be close to the engine, which requires sufficient space in the engine room. This causes difficulties in a marine vessel since the SCR unit is a large component.

According to the present invention, due to the independent location of the turbine unit 6 including the electric generator 7 and the compressor unit 10, the selective catalytic reduction unit 5 can be arranged in the engine casing 21 receiving the exhaust gas flow directly from the exhaust pipe 4 of the internal combustion engine 3. Also, there is no need to provide an auxiliary blower for low engine loads. Consequently, lesser space is required in the engine room itself, which also allows for more flexible arrangements.

A further important advantage of this arrangement is that the exhaust gas flow leaving the internal combustion engine 3 and entering the selective catalytic reduction unit 5, as there is no intermediate component such as a turbo charger, will have a high enough temperature in order to provide for an effective selective catalytic reduction process also for a 2-stroke low speed engine, which typically is deployed in marine vessels.

In case the internal combustion engine 3 is a 4-stroke medium speed engine with a conventional turbo charger, the exhaust gas flow normally is from the engine to the turbo charger and then to the selective catalytic reduction unit (and further to the exhaust gas economiser). However, as in according to the present invention there is no intermediate component such as a turbo charger, the selective catalytic reduction 5 unit will start working sooner during engine start-up and also at very low loads owing to higher exhaust gas flow temperature before the selective catalytic reduction unit 5. This enhances emission control.

The description and the thereto related drawings are only intended to clarify the basic idea of the invention. The invention may vary within the scope of the ensuing claims.

## Claims

1. Internal combustion engine arrangement deployed on a marine vessel (1) having an exterior and being provided with an engine room (2) and an engine casing (21), which the engine casing (21) is directly connected to the engine room (2) and is located above the engine room (2) of the marine vessel (1) extending from the engine room (2) up to the exterior of the marine vessel (1), which internal combustion engine arrangement comprises an internal combustion engine (3), an exhaust pipe (4) connected to the internal combustion engine for receiving an exhaust gas flow from the internal combustion engine, **characterised in that** the internal combustion engine arrangement comprises a turbine unit (6) including an electric generator (7) arranged after the exhaust pipe (4) in the direction of the exhaust gas flow, whereby the exhaust pipe (4), the turbine unit (6) and the electric generator (7) are arranged in the engine casing (21), and the internal combustion engine (3) further comprises a compressor unit (10), which is provided with an electric motor (12) and which is directly connected to the internal combustion engine (3), whereby the compressor unit (10) is arranged to supply combustion air to the internal combustion engine (3), and which electric generator (7) of the turbine unit (6) is connected to the electric motor (12) of the compressor unit (10) by means of an electric switchboard (14), whereby the compressor unit (10) is arranged to be independently working, the internal combustion engine (3) is a 2-stroke low speed engine, and **in that** a selective catalytic reduction unit (5) is arranged in the engine casing (21) directly before the turbine unit (6) including the electric generator (7) in the direction of the exhaust gas flow and the selective catalytic reduction unit (5) is arranged in the engine casing (21) receiving the exhaust gas flow directly from the exhaust pipe (4) of the internal combustion engine (3), wherein a location of the turbine unit (6) including the electric generator (7) within the casing (21) is configured independent from a location of the compressor unit (10).

2. Internal combustion engine arrangement according to claim 1, **characterised in that** an exhaust gas economiser (8) is arranged directly after the turbine unit (6) including an electric generator (7) in the direction of the exhaust gas flow.

3. Internal combustion engine arrangement according to claim 2, **characterised in that** a silencer (9) is arranged directly after the exhaust gas economiser (8) in the direction of the exhaust gas flow.

4. Internal combustion engine arrangement according to claim 2, **characterised in that** the exhaust gas economiser (8) is arranged in the engine casing (21).

5. Internal combustion engine arrangement according to claim 3, **characterised in that** the silencer (9) is arranged in the engine casing (21).

6. Internal combustion engine arrangement according to claim 1, **characterised in that** the internal combustion engine (3) is a dual fuel engine.

7. Internal combustion engine arrangement according to claim 1, **characterised in that** a first control means (13) is arranged between the electric generator (7) of the turbine unit (6) and the electric switchboard (14).

8. Internal combustion engine arrangement according to claim 1, **characterised in that** a second control means (15) is arranged between the electric switchboard (14) and the electric motor (12).

9. Internal combustion engine arrangement according to claim 1, **characterised in that** the internal combustion engine arrangement is provided with one or more auxiliary generator units (16), which are connected to the electric switchboard (14).

## Patentansprüche

1. Verbrennungskraftmaschinenanordnung, die auf einem Seefahrzeug (1) eingesetzt wird, das ein Äußeres hat und mit einem Maschinenraum (2) und einem Maschinengehäuse (21) versehen ist, wobei das Maschinengehäuse (21) unmittelbar mit dem Maschinenraum (2) verbunden ist und oberhalb des Maschinenraums (2) des Seefahrzeugs (1) angeordnet ist, wobei es sich von dem Maschinenraum (2) hinauf zu dem Äußeren des Seefahrzeugs (1) erstreckt,
wobei die Verbrennungskraftmaschinenanordnung eine Verbrennungskraftmaschine (3), ein Abgasrohr (4), das mit der Verbrennungskraftmaschine verbunden ist, um einen Abgasstrom von der Verbrennungskraftmaschine aufzunehmen, umfasst, **dadurch gekennzeichnet, dass** die Verbrennungskraftmaschinenanordnung eine Turbineneinheit (6) umfasst, die einen elektrischen Generator (7) einschließt, angeordnet hinter dem Abgasrohr (4) in der Richtung des Abgasstroms, wobei das Abgasrohr (4), die Turbineneinheit (6) und der elektrische Generator (7) in dem Maschinengehäuse (21) angeordnet sind,
und die Verbrennungskraftmaschine (3) ferner eine Verdichtereinheit (10) umfasst, die mit einem Elektromotor (12) versehen ist und die unmittelbar mit der Verbrennungskraftmaschine (3) verbunden ist, wobei die Verdichtereinheit (10) dafür angeordnet ist, der Verbrennungskraftmaschine (3) Verbrennungsluft zuzuführen, und
der elektrische Generator (7) der Turbineneinheit (6) mit Hilfe einer elektrischen Schalttafel (14) mit dem Elektromotor (12) der Verdichtereinheit (10) verbunden ist, wodurch die Verdichtereinheit (10) dafür angeordnet ist, unabhängig zu arbeiten,
die Verbrennungskraftmaschine (3) eine langsam laufende Zweitakt-Kraftmaschine ist, und dadurch, dass eine selektive katalytische Reduktionseinheit (5) in dem Maschinengehäuse (21) vor der Turbineneinheit (6), die den elektrischen Generator (7) einschließt, in der Richtung des Abgasstroms angeordnet ist und die selektive katalytische Reduktionseinheit (5) in dem Maschinengehäuse (21) so angeordnet ist, dass sie den Abgasstrom unmittelbar von dem Abgasrohr (4) der Verbrennungskraftmaschine (3) aufnimmt, wobei eine Position der Turbineneinheit (6), die den elektrischen Generator (7) einschließt, innerhalb des Maschinengehäuses (21) unabhängig von einer Position der Verdichtereinheit (10) konfiguriert ist.

2. Verbrennungskraftmaschinenanordnung nach Anspruch 1, **dadurch gekennzeichnet, dass** ein Abgasvorwärmer (8) unmittelbar hinter der Turbineneinheit (6), die einen elektrischen Generator (7) einschließt, in der Richtung des Abgasstroms angeordnet ist.

3. Verbrennungskraftmaschinenanordnung nach Anspruch 2, **dadurch gekennzeichnet, dass** ein Schalldämpfer (9) unmittelbar hinter dem Abgasvorwärmer (8) in der Richtung des Abgasstroms angeordnet ist.

4. Verbrennungskraftmaschinenanordnung nach Anspruch 2, **dadurch gekennzeichnet, dass** der Abgasvorwärmer (8) in dem Maschinengehäuse (21) angeordnet ist.

5. Verbrennungskraftmaschinenanordnung nach Anspruch 3, **dadurch gekennzeichnet, dass** der Schalldämpfer (9) in dem Maschinengehäuse (21) angeordnet ist.

6. Verbrennungskraftmaschinenanordnung nach Anspruch 1, **dadurch gekennzeichnet, dass** die Verbrennungskraftmaschine (3) eine Zweistoff-Kraftmaschine ist.

7. Verbrennungskraftmaschinenanordnung nach Anspruch 1, **dadurch gekennzeichnet, dass** ein erstes Steuerungsmittel (13) zwischen dem elektrischen Generator (7) der Turbineneinheit (6) und der elektrischen Schalttafel (14) angeordnet ist.

8. Verbrennungskraftmaschinenanordnung nach Anspruch 1, **dadurch gekennzeichnet, dass** ein zweites Steuerungsmittel (15) zwischen der elektrischen Schalttafel (14) und dem Elektromotor (12) angeordnet ist.

9. Verbrennungskraftmaschinenanordnung nach Anspruch 1, **dadurch gekennzeichnet, dass** die Verbrennungskraftmaschinenanordnung mit einer oder mehreren Hilfsgeneratoreinheiten (16) versehen ist, die mit der elektrischen Schalttafel (14) verbunden sind.

## Revendications

1. Agencement de moteur à combustion interne déployé sur un bâtiment de marine (1) ayant un extérieur et étant muni d'un compartiment moteur (2) et un carter de moteur (21), lequel carter de moteur (21) est directement raccordé au compartiment moteur (2) et est situé au-dessus du compartiment moteur (2) du bâtiment de marine (1) s'étendant du compartiment moteur (2) jusqu'à l'extérieur du bâtiment de marine (1), lequel agencement de moteur à combustion interne comprend un moteur à combustion interne (3), un conduit d'échappement (4) raccordé au moteur à combustion interne pour recevoir un écoulement de gaz d'échappement du moteur à combustion interne, **caractérisé en ce que** l'agencement de moteur à combustion interne comprend une unité de turbine (6) incluant une génératrice électrique (7) disposée après le conduit d'échappement (4) dans la direction de l'écoulement des gaz d'échappement, dans lequel le conduit d'échappement (4), l'unité de turbine (6) et la génératrice électrique (7) sont disposés dans le carter de moteur (21) et le moteur à combustion interne (3) comprend en plus une unité de compresseur (10) qui est munie d'un moteur électrique (12) et qui est directement raccordée au moteur de combustion interne (3), dans lequel l'unité de compresseur (10) est agencée pour alimenter en air de combustion le moteur à combustion interne (3) et laquelle génératrice électrique (7) de l'unité de turbine (6) est raccordée au moteur électrique (12) de l'unité de compresseur (10) au moyen d'un panneau de distribution électrique (14), dans lequel l'unité de compresseur (10) est agencée pour fonctionner de façon indépendante, le moteur à combustion interne (3) est un moteur à faible vitesse à 2 temps et **en ce qu'**une unité de réduction catalytique sélective (5) est disposée dans le carter de moteur (21) directement avant l'unité de turbine (6) incluant la génératrice électrique (7) dans la direction de l'écoulement des gaz d'échappement et l'unité de réduction catatytique sélective (5) est disposée dans le carter de moteur (21) recevant l'écoulement des gaz d'échappement directement du conduit d'échappement (4) du moteur à combustion interne (3), dans lequel un emplacement de l'unité de turbine (6) incluant la génératrice électrique (7) dans le carter (21) est configuré indépendant d'un emplacement de l'unité de compresseur (10).

2. Agencement de moteur à combustion interne selon la revendication 1, **caractérisé en ce qu'**un économiseur de gaz d'échappement (8) est disposé directement après l'unité de turbine (6) incluant une génératrice électrique (7) dans la direction de l'écoulement des gaz d'échappement.

3. Agencement de moteur à combustion interne selon la revendication 2 **caractérisé en ce qu'**un silencieux (9) est disposé directement après l'économiseur de gaz d'échappement (8) dans la direction de l'écoulement des gaz d'échappement.

4. Agencement de moteur à combustion interne selon la revendication 2 **caractérisé en ce que** l'économiseur de gaz d'échappement (8) est disposé dans le carter de moteur (21).

5. Agencement de moteur à combustion interne selon la revendication 3 **caractérisé en ce que** le silencieux (9) est disposé dans le carter de moteur (21).

6. Agencement de moteur à combustion interne selon la revendication 1 **caractérisé en ce que** le moteur à combustion interne (3) est un moteur à double carburant.

7. Agencement de moteur à combustion interne selon la revendication 1 **caractérisé en ce qu'**un premier moyen de contrôle (13) est disposé entre la génératrice électrique (7) de l'unité de turbine (6) et le panneau de distribution électrique (14).

8. Agencement de moteur à combustion interne selon la revendication 1 **caractérisé en ce qu'**un deuxième moyen de contrôle (15) est disposé entre le panneau de distribution électrique (14) et le moteur électrique (12).

9. Agencement de moteur à combustion interne selon la selon la revendication 1 **caractérisé en ce que** l'agencement de moteur à combustion interne est muni d'une ou plusieurs unités de génératrice auxiliaires (16) qui sont connectées au panneau de distribution électrique (14).
